# EUROPÄISCHE PATENTANMELDUNG

(11) **EP 3 190 071 A1**
(43) Veröffentlichungstag der Anmeldung: **12.07.2017**
(21) Anmeldenummer: 16207061.9
(22) Anmeldetag: 28.12.2016
(51) Int. Cl.: B65G 65/44, B65G 25/08

(54) **VORRICHTUNG ZUM AUSTRAGEN VON HACKGUT AUS EINEM VORRATSRAUM**

(30) Priorität: 07.01.2016 AT 500052016
(71) Anmelder: Raggam, August, 8403 Lebring (AT)
(72) Erfinder: Raggam, August, 8403 Lebring (AT)
(74) Vertreter: Röggla, Harald

(57) **Zusammenfassung**

Vorrichtung (1) zum Austragen von Hackgut (3) aus einem Vorratsraum (2), umfassend zumindest eine Schubstange (5), welche Schubstange (5) in Bodennähe im Vorratsraum (2) ausgebildet ist, Schubelemente (6), welche Schubelemente (6) mit der zumindest einen Schubstange (5) gekoppelt sind, zumindest eine Antriebseinheit (4), welche auf die zumindest eine Schubstange (5) wirkt und welche zum Austragen von Hackgut (3) die zumindest eine Schubstange (5) in eine periodische Hubbewegung versetzt. Durch die Hubbewegung wird Hackgut (3) von den Schubelementen (6) in Richtung einer Bodenöffnung (8) transportiert. Ferner weist die Vorrichtung (1) Mitnahmeelemente (12) auf, welche Mitnahmeelemente (12) in oder an der Schubstange (5) ausgebildet sind. Jeweils ein Mitnahmeelement (12) ist zum Mitnehmen jeweils eines Schubelements (6) ausgebildet, wobei die Mitnahme je eines Schubelements (6) durch je ein Mitnahmeelement (12) nur erfolgt, wenn ein Hackgutfülldruck (22) auf das Schubelement (6) geringer als ein vorher festgelegter Grenzdruck ist.

## Beschreibung

Die Erfindung betrifft eine Vorrichtung zum Austragen von Hackgut aus einem Vorratsraum, umfassend zumindest eine Schubstange, welche Schubstange in Bodennähe im Vorratsraum ausgebildet ist, Schubelemente, welche Schubelemente mit der zumindest einen Schubstange gekoppelt sind, und zumindest eine Antriebseinheit, welche auf die zumindest eine Schubstange wirkt und welche zum Austragen von Hackgut die zumindest eine Schubstange in eine periodische Hubbewegung versetzt, wodurch Hackgut von den Schubelementen in Richtung einer Bodenöffnung transportiert wird.

Es sind ganz allgemein Vorrichtungen zum Austragen von Hackgut aus Vorratsräumen bekannt, die eine Antriebseinheit in Form eines hydraulischen Antriebs und einen Rechen aufweisen. Der Rechen ist durch mehrere entlang einer Schubstange angebrachte Schubelemente gebildet und wird durch die Antriebseinheit in eine periodische Hubbewegung versetzt. Die Schubelemente sind keilförmig geformt und sind so an der Schubstange angebracht, dass sie bei einer Vorwärtsbewegung der periodischen Hubbewegung Hackgut in Richtung einer Bodenöffnung transportieren, wodurch das Hackgut aus dem Vorratsraum ausgetragen wird. Bei einer Rückwärtsbewegung der periodischen Hubbewegung schieben sich die keilförmigen Schubelemente unter das Hackgut, wodurch ein Rücktransport des Hackguts verhindert wird.

Eine solche Vorrichtung zum Austragen von Hackgut aus einem Vorratsraum ist zum Beispiel aus der Patentanmeldung DE 10 2010 008 196 A1 bekannt.

Bei der Vorrichtung bekannt aus der Patentanmeldung DE 10 2010 008 196 A1 ist der Nachteil erhalten, dass aufgrund der fixen Verankerung der Schubelemente auf der Schubstange bei jeder Hubbewegung unabhängig vom Füllgrad des Vorratsraums ein gesamter Boden des Vorratsraums abgeschert wird. Infolge ist die Austragung von Hackgut aus dem Vorratsraum vor allem bei vollem Vorratsraum sehr energieaufwändig, da aufgrund des Eigengewichts des Hackguts bei der Hubbewegung des Rechens sehr hohe auf die Schubelemente wirkende Scherkräfte überwunden werden müssen.

Es ist daher die Aufgabe der vorliegenden Erfindung, eine Vorrichtung zum Austragen von Hackgut aus einem Vorratsraum auszubilden, die bei geringerem Energieeinsatz die gleiche Menge an Hackgut aus dem Vorratsraum austrägt.

Die erfindungsgemäße Vorrichtung löst diese Aufgabe dadurch, dass die Vorrichtung Mitnahmeelemente aufweist, welche Mitnahmeelemente in oder an der Schubstange ausgebildet sind, wobei jeweils ein Mitnahmeelement zum Mitnehmen jeweils eines Schubelements ausgebildet ist und wobei die Mitnahme je eines Schubelements durch je ein Mitnahmeelement nur erfolgt, wenn ein Hackgutfülldruck auf das Schubelement geringer als ein vorher festgelegter Grenzdruck ist.

Hierdurch ist der Vorteil erhalten, dass die Mitnahme jeweils eines Schubelements individuell angepasst an einen Füllgrad des Vorratsraums und an eine Füllverteilung des Hackguts im Vorratsraum erfolgt. Der Vorratsraum wird nur in den Bereichen ausgetragen, in denen der Hackgutfülldruck geringer als ein vorher festgelegter Grenzdruck ist. Der Grenzdruck wird vorteilhaft durch Versuche ermittelt und wird an verschiedene Hackgut-Zusammensetzungen bzw. Arten des Hackguts angepasst. So muss zum Beispiel der Grenzdruck bei nassem Hackgut höher liegen als bei trockenem Hackgut. Aufgrund der individuell angepassten Mitnahme der Schubelemente müssen zum Austragen des Vorratsraums im Vergleich zum Stand der Technik im Durchschnitt weniger Schubelemente durch die Antriebseinheit mitbewegt werden. Darüber hinaus sind aufgrund der Tatsache, dass nur diejenigen Schubelemente mitbewegt werden, auf die ein Hackgutfülldruck geringer als der Grenzdruck wirkt, die Scherkräfte auf die mitbewegten Schubelemente sehr gering. Infolge ist der Kraftaufwand sehr gering, der nötig ist, um das Hackgut in Richtung der Bodenöffnung zu fördern. Hierdurch ist nicht nur der nötige Energieeinsatz minimal, es können auch die Herstellkosten der Vorrichtung reduziert werden, da die Antriebseinheit um ein vielfaches kleiner dimensioniert werden kann.

Bei der periodischen Hubbewegung wird die zumindest eine Schubstange in einer Vorwärtsbewegung aus einer Ausgangsposition in eine Endposition verlagert und in einer Rückwärtsbewegung aus der Endposition wieder in die Ausgangsposition verlagert, wobei eine bei der Vorwärtsbewegung und Rückwärtsbewegung jeweils zurückgelegte Wegstrecke einem Hub entspricht. Zweckmäßig sind die Schubelemente in der Ausgangsposition der zumindest einen Schubstange entlang ihrer Längsachse zueinander beabstandet an ihr verschiebbar gelagert, wobei der Hub bevorzugt zumindest einem Abstand zwischen zwei benachbarten Schubelementen entspricht. Hierdurch ist der Vorteil erhalten, dass der gesamte Boden des Vorratsraums durch die Schubelemente abgeschert werden kann, wodurch dieser komplett entleerbar ist.

Vorteilhaft ist jeweils ein Mitnahmeelement durch eine Feder und ein Betätigungselement gebildet, wobei das Betätigungselement an der Schubstange gelagert ist. Die Feder drückt das Betätigungselement in eine Mitnahmestellung, in welcher das Betätigungselement auf ein Schubelement wirkt und dieses je nach Ausführungsvariante des Betätigungselements bei der Vorwärtsbewegung und/oder der Rückwärtsbewegung der periodischen Hubbewegung mitnimmt. Übersteigt der auf das Schubelement bzw. das Betätigungselement wirkende Hackgutfülldruck den festgelegten Grenzdruck, wird das Betätigungselement durch den herrschenden Hackgutfülldruck entgegen einer Federkraft der Feder in eine Freigabestellung bewegt. In der Freigabestellung gibt das Betätigungselement das Schubelement frei, wodurch dieses nicht durch die Schubstange bei der periodischen Hubbewegung mitgenommen wird und still steht. Es sei hier noch angemerkt, dass in der Praxis der Hackgutfülldruck im nahen Umfeld zum Schubelement gleich dem Hackgutfülldruck angenommen werden kann, der auf das Schubelement wirkt. Somit ist in der Praxis der Hackgutfülldruck, der auf das Schubelement wirkt, im Wesentlichen gleich dem Hackgutfülldruck auf ein dazugehöriges Betätigungselement.

In einer weiteren Ausführungsvariante ist jeweils ein Mitnahmeelement durch eine Messeinheit, ein Betätigungselement und eine Betätigungseinheit gebildet. Die Messeinheit ist zum Messen des auf das Schubelement wirkenden Hackgutfülldrucks ausgebildet. Die Messeinheit übermittelt die gemessenen Daten über ein drahtloses oder ein kabelgebundenes Netzwerk an die Betätigungseinheit. Die Messeinheit kann entweder am Schubelement, am Betätigungselement, oder an einem sonstigen Element im Nahebereich des Schubelements angebracht sein. Die Betätigungseinheit ist vorteilhaft durch einen pneumatischen oder hydraulischen Hubzylinder mit einer Steuerelektronik gebildet. In einer weiteren Ausführungsvariante kann die Betätigungseinheit auch durch einen Zahnstangenantrieb oder einen Kurbeltrieb mit einer Steuerelektronik gebildet sein. Ist der Hackgutfülldruck kleiner als der Grenzdruck, drückt die Betätigungseinheit das Betätigungselement in die Mitnahmestellung, wodurch das Betätigungselement bei der periodischen Hubbewegung der Schubstange das Schubelement mitbewegt. Bei einem Hackgutfülldruck größer als der Grenzdruck verlagert die Betätigungseinheit das Betätigungselement von der Mitnahmestellung in die Freigabestellung, wodurch das Schubelement freigegeben ist.

Bevorzugt ist die zumindest eine Schubstange durch ein Formrohr, insbesondere ein Vierkant-Formrohr, gebildet und jeweils ein Schubelement ist mittels einer entsprechend geformten Hülse entlang der Längsachse der zumindest einen Schubstange an ihr verschiebbar gelagert. Vorteilhaft steht das Betätigungselement in der Mitnahmestellung aus einer Fläche des Formrohrs hervor und wirkt auf eine Kante oder Fläche der Hülse. Das Betätigungselement ist in der Mitnahmestellung bevorzugt entweder formschlüssig oder kraftschlüssig mit dem Schubelement verbunden. In der Freigabestellung ist das Betätigungselement im Wesentlichen in der Fläche versenkt und gibt die Hülse somit frei.

Vorteilhaft ist jeweils ein Betätigungselement durch einen Hebel gebildet ist, welcher in der Schubstange drehbar gelagert ist. In einer weiteren Ausführungsvariante kann das Betätigungselement auch durch einen Bolzen gebildet sein, welcher an oder in der Schubstange verschiebbar gelagert ist.

Weitere vorteilhafte Ausgestaltungen der erfindungsgemäßen Vorrichtung werden in weiterer Folge anhand der Figuren näher erläutert.
Figur 1 zeigt in einer Draufsicht zwei erfindungsgemäße Vorrichtungen in einer ersten Ausführungsvariante zum Austragen von Hackgut aus einem Vorratsraum.
Figur 2 zeigt in einer Seitenansicht eine Vorrichtung der Ausführungsvariante gezeigt in Figur 1 in einer Seitenansicht.
Figur 3 zeigt in einer schematischen Ansicht eine Vorrichtung der Ausführungsvariante gezeigt in Figur 1 mit einer Schubstange in einer Ausgangsposition und der Schubstange in einer Endposition.
Figur 4a zeigt in einer Detailansicht eine erste Ausführungsvariante eines Mitnahmeelements zum Mitnehmen eines Schubelements.
Figur 4b zeigt in einer Detailansicht eine weitere Ausführungsvariante eines Mitnahmeelements zum Mitnehmen eines Schubelements.

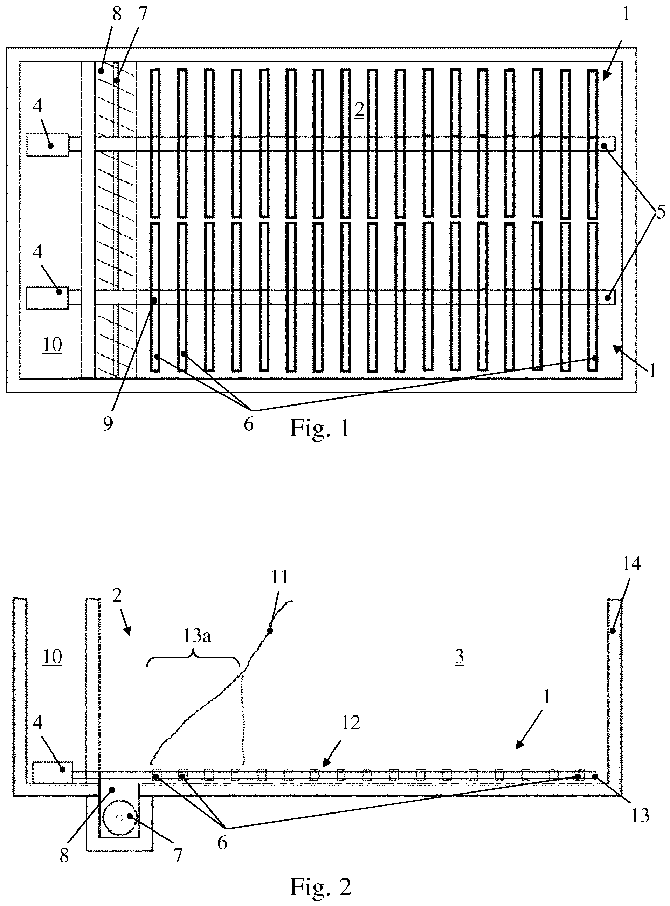

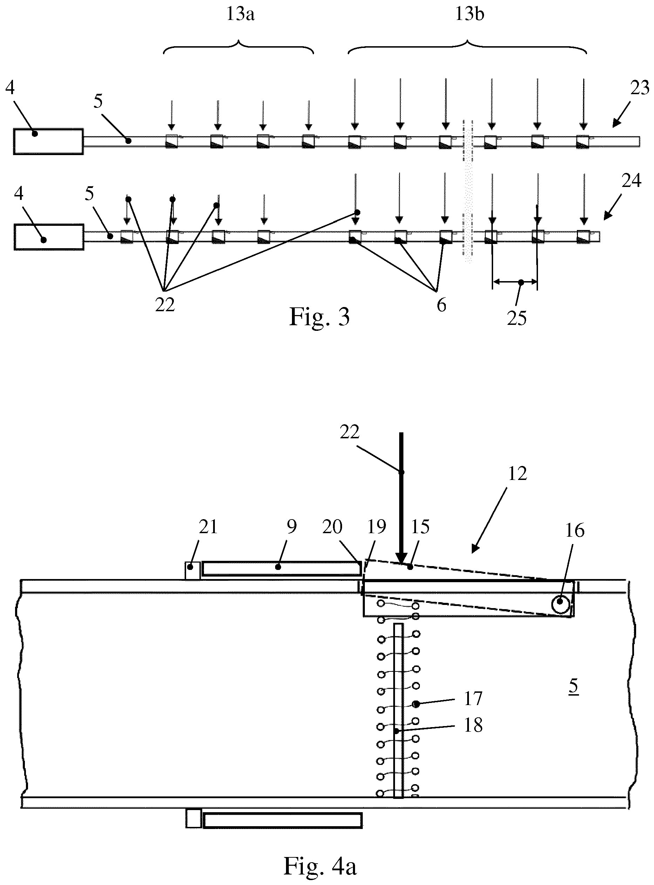

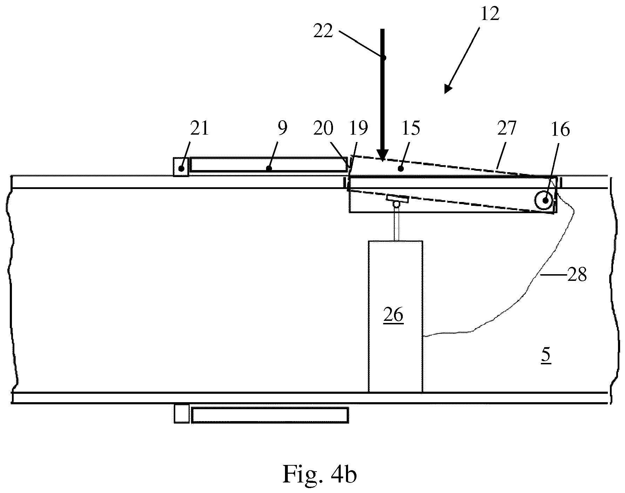

Figur 1 zeigt in einer Draufsicht zwei erfindungsgemäße Vorrichtungen 1 in einer ersten Ausführungsvariante in einem Vorratsraum 2 zum Austragen von Hackgut 3 aus diesem. Im Vorratsraum 2 ist eine Querfördereinheit in Form einer Förderschnecke 7 ausgebildet, die in einer Bodenöffnung 8 angeordnet ist. Jeweils eine Vorrichtung 1 umfasst eine Antriebseinheit 4, eine Schubstange 5, mehrere Schubelemente 6 und mehrere nicht näher dargestellte Mitnahmeelemente 12. Verschiedene Ausführungsvarianten der Mitnahmeelemente 12 sind in Figur 4a und Figur 4b im Detail dargestellt. Die Schubstange 5 ist durch ein Vierkant-Formrohr gebildet und verschiebbar in nicht dargestellten Führungen im Vorratsraum 2 gelagert. Die Schubelemente 6 sind jeweils keilförmig ausgebildet und mittels Hülsen 9 an der Schubstange 5 verschiebbar gelagert. Die Antriebseinheit 4 ist mit der Schubstange 5 gekoppelt und dazu ausgebildet, die Schubstange 5 in eine periodische Hubbewegung zu versetzen. Vorteilhaft ist die Antriebseinheit 4 durch einen Zahnstangentrieb, einen Kurbeltrieb, einen Hydraulikzylinder oder einen Pneumatikzylinder gebildet. Die Antriebseinheit 4 ist in einem zum Vorratsraum 2 separierten Antriebsraum 10 untergebracht, um die Wartung zu vereinfachen.

Figur 2 zeigt eine Vorrichtung 1 der Ausführungsvariante gezeigt in Figur 1 in einer Seitenansicht. Der Vorratsraum 2 wird vorteilhaft durch eine nicht dargestellte Luke im oberen Bereich des Vorratsraums 2 mit Hackgut 3 befüllt. Der Antrieb der Förderschnecke 7 und die Antriebseinheit 4 werden mittels einer nicht dargestellten Rechnereinheit in Abhängigkeit einer geforderten Austragsrate an Hackgut 3 aus dem Vorratsraum 2 gesteuert. Die Austragungsrate an Hackgut 3 wird mittels nicht dargestellter an der Rechnereinheit angeschlossener Sensoren gemessen. Ist der Vorratstraum 2 komplett mit Hackgut 3 befüllt, steht die Antriebseinheit 4 still. Das Hackgut 3, das sich über der Förderschnecke 7 befindet, wird durch diese aus dem Vorratsraum 2 ausgetragen. Durch die Austragung des Hackguts 3 im Bereich der Förderschnecke 7 bildet sich bei dem restlichen im Vorratsraum 2 befindlichen Hackgut 3 ein Böschungswinkel 11 aus. Wird durch die Sensoren eine Abnahme der Austragungsrate detektiert, wird die Antriebseinheit 4 aktiviert, wobei die Schubstange 5 in einer periodischen Hubbewegung versetzt wird. In Abhängigkeit von einem von dem Gewicht des Hackguts 3 auf die Schubelemente 6 wirkenden Hackgutfülldruck 22 werden die Schubelemente 6 durch die Mitnahmeelemente 12 mitgenommen, bei denen der Hackgutfülldruck 22 geringer als ein festgelegter Grenzdruck ist. Der Grenzdruck ist wie bereits erwähnt abhängig von der Art des Hackguts 3 und von der Hackgut-Zusammensetzung.

Aufgrund der Form des Böschungswinkels 11 beträgt der Hackgutfülldruck 22 im Bereich 13a, in dem sich vier Schubelemente 6 befinden, weniger als der festgelegte Grenzdruck, wodurch die vier Schubelemente 6 jeweils durch ihre Mitnahmeelemente 12 bei der periodischen Hubbewegung der Schubstange 5 mitbewegt werden und Hackgut 3 aus dem Bereich 13a austragen. Durch den Abtransport des Hackguts 3 aus dem Bereich 13a verändert sich kontinuierlich die Form des Böschungswinkels 11, da durch die Austragung immer wieder Hackgut 3 von oben in den Bereich 13a nach fällt. Durch die Veränderung der Form des Böschungswinkels 11 sinkt in Folge in weiteren Bereichen der Hackgutfülldruck 22 unter den Grenzdruck, wodurch weitere Schubelemente 6 durch ihre Mitnahmeelemente 12 mitgenommen werden. Der Böschungswinkel 11 wandert somit durch das Austragen des Hackguts 3 in Richtung der Wand 14, wobei sich bei fast leerem Vorratsraum 2 alle Schubelemente 6 mit der Schubstange 5 mitbewegen. Bei einem erneuten Befüllen des Vorratsraums 2 bewegen sich aber wiederum nur diejenigen Schubelement 6 mit, bei denen der Hackgutfülldruck 22 geringer als der festgelegte Grenzdruck ist. Infolge erfolgt die Mitnahme jeweils eines Schubelements 6 individuell angepasst an einen Füllgrad des Vorratsraums 2 und an eine Füllverteilung des Hackguts 3 im Vorratsraum 2, wodurch zum Austragen des Hackguts 3 sehr wenig Energie aufgewendet werden muss.

Figur 3 zeigt die Ausführungsvariante der Vorrichtung 1 gezeigt in Figur 2 in einer schematischen Ansicht in zwei verschiedenen Hubstellungen. Bei einer ersten Hubstellung befindet sich die Schubstange 5 in einer Ausgangsposition 23 und bei der anderen Hubstellung befindet sich die Schubstange 5 in einer Endposition 24. In einem Bereich 13a ist der Hackgutfülldruck 22 geringer als der Grenzdruck und in einem Bereich 13b ist der Hackgutfülldruck 22 größer als der Grenzdruck. Bei einer Hubbewegung der Schubstange 5, also bei einer Verlagerung der Schubstange 5 von der Ausgangsposition 23 in die Endposition 24 und wieder zurück, werden nur die Schubelemente 6 mitbewegt, die sich im Bereich 13a befinden. Die Schubelemente 6, die sich im Bereich 13b befinden, verharren in ihrer Position und werden durch die Schubstange 5 nicht mitbewegt. Somit wird bei dieser Hackgutfülldruck-Verteilung im Vorratsraum 2 nur Hackgut 3 aus dem Bereich 13a ausgetragen. Ein Hub 25 der Hubbewegung entspricht einem Abstand zwischen zwei benachbarten Schubelementen 6, wodurch der Vorteil erhalten ist, dass das gesamte Hackgut 3 aus dem Vorratsraum 2 ausgetragen werden kann.

Figur 4a zeigt in einer Detailansicht eine Ausführungsvariante eines Mitnahmeelements 12 zum Mitnehmen eines Schubelements 6. Das Mitnahmeelement 12 besteht aus einem Betätigungselement in Form eines Hebels 15, der mittels eines Bolzens 16 drehbar in der Schubstange 5 gelagert ist, und einer Feder 17, welche entlang einer Führung 18 geführt ist. Das Schubelement 6 ist keilförmig ausgebildet und weist mittig eine Hülse 9 auf. Die Feder 17 ist dazu ausgebildet, den Hebel 15 bei einem Hackgutfülldruck 22 geringer als der Grenzdruck in eine Mitnahmestellung zu drücken, wodurch der Hebel 15 aus einer Fläche der Schubstange 5 hervor steht. Hierdurch wird eine Seitenkante 19 des Hebels 15 im Wesentlichen in Kontakt mit einer Seitenkante 20 der Hülse 9 gebracht, wodurch das Mitnahmeelement 12 das Schubelement 6 bei einer Bewegung der Schubstange 5 von der Ausgangsposition 23 in die Endposition 24 mitnimmt. Das Schubelement 6 wird mit der Schubstange 5 in die Endposition 24 verlagert. Bei dieser Ausführungsvariante ist der Grenzdruck durch eine Federkraft der Feder 17 einstellbar.

Zum Rückführen des Schubelements 6 von der Endposition 24 in die Ausgangsposition 23 ist an der der Schubstange 5 ein Rückführelement 21 ausgebildet.

Bei einem Hackgutfülldruck 22 größer als der Grenzdruck wird der Hebel 15 durch den Hackgutfülldruck 22 entgegen der Federkraft in eine Freigabestellung gedrückt, wodurch der Hebel 15 in der Fläche der Schubstange 5 versenkt ist und das Schubelement 6 freigegeben ist.

In einer weiteren Ausführungsvariante weist der Hebel 15 an seiner Seitenkante 19 einen Fortsatz in Form eines Hackens auf und die Hülse 9 des Schubelements 6 weist eine entsprechende Ausnehmung auf, in die der Hacken bei in der Mitnahmestellung befindlichem Hebel 15 eingreift. Hierdurch ist der Vorteil erhalten, dass auf ein Rückführelement 21 verzichtet werden kann und ein Hub der Hubbewegung beliebig lang gewählt werden kann.

In einer weiteren Ausführungsvariante ist das Betätigungselement durch ein zylinderförmiges Element gebildet, das verschiebbar in oder an der Schubstange 5 gelagert ist.

Figur 4b zeigt in einer Detailansicht eine weitere Ausführungsvariante eines Mitnahmeelements 12 zum Mitnehmen eines Schubelements 6. Im Unterschied zu dem Mitnahmeelement 12 gezeigt in Figur 4a besteht das Mitnahmeelement 12 bei dieser Ausführungsvariante aus einem Betätigungselement, einer Messeinheit 27 und einer Betätigungseinheit 26. Das Betätigungselement ist durch einen Hebel 15 gebildet, der mittels eines Bolzens 16 drehbar in der Schubstange 5 gelagert ist. Die Betätigungseinheit 26 ist mit dem Hebel 15 gekoppelt. Die Messeinheit 27 ist an dem Hebel 15 angebracht und mit einem Kabel 28 mit der Betätigungseinheit 26 verbunden. Die Messeinheit 27 ist zum Messen des Hackgutfülldrucks 22 und zum Übertragen der gemessenen Daten an die Betätigungseinheit 26 ausgebildet. Die Betätigungseinheit 26 ist durch einen Servomotor mit einer Steuereinheit gebildet, wobei die Betätigungseinheit 26 den Hebel 15 bei einem Hackgutfülldruck 22 größer als der festgelegte Grenzdruck in die Freigabestellung verlagert und bei einem Hackgutfülldruck 22 kleiner als der festgelegte Grenzdruck in eine Mitnahmestellung verlagert.

In einer weiteren Ausführungsvariante ist das Betätigungselement durch ein zylinderförmiges Element gebildet, das verschiebbar in der Schubstange 5 gelagert ist. Das zylinderförmige Element ist in der Mitnahmestellung entweder kraftschlüssig oder formschlüssig mit der Hülse 9 eines Schubelements 6 verbunden.

Es kann erwähnt werden, dass die Messeinheit auf Basis beliebiger dem Fachmann bekannter Druckmessmethoden realisiert werden kann. Die Betätigungseinheit wiederum kann durch einen mechanischen, pneumatischen, hydraulischen, magnetischen oder elektrischen Antrieb realisiert werden.

## Patentansprüche

1. Vorrichtung (1) zum Austragen von Hackgut (3) aus einem Vorratsraum (2), umfassend zumindest eine Schubstange (5), welche Schubstange (5) in Bodennähe im Vorratsraum (2) ausgebildet ist,
Schubelemente (6), welche Schubelemente (6) mit der zumindest einen Schubstange (5) gekoppelt sind, und
zumindest eine Antriebseinheit (4), welche auf die zumindest eine Schubstange (5) wirkt und welche zum Austragen von Hackgut (3) die zumindest eine Schubstange (5) in eine periodische Hubbewegung versetzt, wodurch Hackgut (3) von den Schubelementen (6) in Richtung einer Bodenöffnung (8) transportiert wird,
**dadurch gekennzeichnet, dass** die Vorrichtung (1) Mitnahmeelemente (12) aufweist, welche Mitnahmeelemente (12) in oder an der Schubstange (5) ausgebildet sind, wobei jeweils ein Mitnahmeelement (12) zum Mitnehmen jeweils eines Schubelements (6) ausgebildet ist und wobei die Mitnahme je eines Schubelements (6) durch je ein Mitnahmeelement (12) nur erfolgt, wenn ein Hackgutfülldruck (22) auf das Schubelement (6) geringer als ein vorher festgelegter Grenzdruck ist.

2. Vorrichtung (1) nach Anspruch 1, **dadurch gekennzeichnet, dass** jeweils ein Mitnahmeelement (12) durch eine Feder (17) und ein Betätigungselement gebildet ist, welches Betätigungselement an der zumindest einen Schubstange (5) gelagert ist, wobei die Feder (17) das Betätigungselement in eine Mitnahmestellung drückt und das Hackgut (3) das Betätigungselement von der Mitnahmestellung in eine Freigabestellung bewegt, wenn der Hackgutfülldruck (22) auf das Betätigungselement größer als der Grenzdruck ist, wobei das Betätigungselement in der Mitnahmestellung auf ein Schubelement (6) wirkt und dieses mitnimmt und wobei das Betätigungselement in der Freigabestellung das Schubelement (6) frei gibt.

3. Vorrichtung (1) nach Anspruch 1, **dadurch gekennzeichnet, dass** jeweils ein Mitnahmeelement (12) durch eine Messeinheit (27), ein Betätigungselement und eine Betätigungseinheit (26) gebildet ist, wobei die Messeinheit (27) zum Messen des auf das Schubelement (6) wirkenden Hackgutfülldrucks (27) und zum Übermitteln der erfassten Daten an die Betätigungseinheit (26) ausgebildet ist, welche das Betätigungselement bei einem Hackgutfülldruck (22) kleiner als der Grenzdruck in eine Mitnahmestellung verlagert und bei einem Hackgutfülldruck (22) größer als der Grenzdruck in eine Freigabestellung verlagert, wobei das Betätigungselement in der Mitnahmestellung auf ein Schubelement (6) wirkt und dieses mitnimmt und wobei das Betätigungselement in der Freigabestellung das Schubelement (6) frei gibt.

4. Vorrichtung (1) nach Anspruch 2 oder 3, **dadurch gekennzeichnet, dass** die zumindest eine Schubstange (5) durch ein Formrohr gebildet ist und jeweils ein Schubelement (6) mittels einer entsprechend geformten Hülse (9) entlang einer Längsachse der zumindest einen Schubstange (5) an ihr verschiebbar gelagert ist, wobei das Betätigungselement in der Mitnahmestellung aus einer Fläche des Formrohrs hervorsteht und auf die Hülse (9) wirkt und wobei das Betätigungselement in der Freigabestellung im Wesentlichen in der Fläche versenkt ist und die Hülse (9) somit freigibt.

5. Vorrichtung (1) nach einem der Ansprüche 2 bis 4, **dadurch gekennzeichnet, dass** jeweils ein Betätigungselement durch einen Hebel (15) gebildet ist, welcher in der zumindest einen Schubstange (5) drehbar gelagert ist.

6. Vorrichtung (1) nach einem der Ansprüche 1 bis 5, **dadurch gekennzeichnet, dass** die Antriebseinheit (4) bei der periodischen Hubbewegung die zumindest eine Schubstange (5) in einer Vorwärtsbewegung aus einer Ausgangsposition (23) in eine Endposition (24) verlagert und in einer Rückwärtsbewegung aus der Endposition (24) wieder in die Ausgangsposition (23) verlagert, wobei eine bei der Vorwärtsbewegung und Rückwärtsbewegung jeweils zurückgelegte Wegstrecke einem Hub (25) entspricht, und dass die Schubelemente (6) in der Ausgangsposition (23) der zumindest einen Schubstange (5) entlang ihrer Längsachse zueinander beabstandet an der zumindest einen Schubstange (5) verschiebbar gelagert sind, wobei der Hub (25) im Wesentlichen einem Abstand zwischen zwei benachbarten Schubelementen (6) entspricht.

7. Vorrichtung (1) nach Anspruch 6, **dadurch gekennzeichnet, dass** an der zumindest einen Schubstange Rückführelemente (21) ausgebildet sind, wobei bei einer Rückwärtsbewegung der zumindest einen Schubstange (5) jeweils ein Rückführelement (21) jeweils ein bei der Vorwärtsbewegung mitgenommenes Schubelement (6) zurück bewegt.

8. Verfahren zum Austragen von Hackgut (3) aus einem Vorratsraum (2) mit einer Vorrichtung (1) nach einem der Ansprüche 1 bis 7, **dadurch gekennzeichnet, dass** mit der Vorrichtung (1) aus dem Vorratsraum (2) in Abhängigkeit vom Hackgutfülldruck (22) nur bereichsweise Hackgut (3) linear ausgetragen wird.
